# EUROPÄISCHE PATENTSCHRIFT

(11) **EP 2 826 994 B1**
(45) Veröffentlichungstag und Bekanntmachung des Hinweises auf die Patenterteilung: **04.09.2019**
(21) Anmeldenummer: 14002494.4
(22) Anmeldetag: 17.07.2014
(51) Int. Cl.: F03G 1/02

(54) **Vorrichtung zur mechanischen Energiespeicherung von elektrischer Energie / Axialbewegungsspeichersammler**
Device for the mechanical storage of electrical energy / axial movement storage device
Dispositif mécanique de stockage d'énergie électrique / collecteur-accumulateur à mouvement axial

(30) Priorität: 19.07.2013 DE 102013012138
(43) Veröffentlichungstag der Anmeldung: 21.01.2015
(73) Patentinhaber: Müller, Veit, 08428 Langenbernsdorf (DE)
(72) Erfinder: Müller, Veit, 08428 Langenbernsdorf (DE)

(56) Entgegenhaltungen:
- EP-A1- 0 623 743
- WO-A2-2010/049492
- FR-A1- 2 449 803

## Beschreibung

Die Erfindung, Axialbewegungsspeichersammler, betrifft eine Vorrichtung zur mechanischen Speicherung von elektrischer Energie, die vorzugsweise aus erneuerbaren Energiequellen erzeugt wird. Zu diesem Zweck werden unterschiedliche Energieerzeugungsanlagen, die mit erneuerbaren Energiequellen betrieben werden, eingesetzt. Hierzu zählen insbesondere Fotovoltaikanlagen oder Windenergieanlagen.

Insbesondere im Bereich der Heimstromerzeugung und Eigenversorgung bedarf es einer Möglichkeit der Energiespeicherung aus vorgenannten Energiequellen, ohne dem Einsatz von großvolumigen und schweren Akkumulatoren.

Erfolgt keine Stromabnahme durch den Verbraucher wird der Strom dazu benutzt, den Energiespeicher aufzuladen. Neben der Stromabnahme durch Verbraucher wird ein Teil des Stromes dazu genutzt, den Energiespeicher aufzuladen. Die darin gespeicherte mechanische Energie dient dazu, einen Zeitraum, in dem Fotovoltaik- oder Windenergieanlagen keinen Strom liefern, zu überbrücken, indem die gespeicherte mechanische Energie wieder in elektrische Energie umgewandelt wird und dem Verbraucher zugeführt werden kann.

Bekannt ist dazu aus der Patentschrift DE 3006529 ein Energiespeicher, insbesondere mechanischer Energiespeicher, nach dessen Lösungsgedanken durch Wickeln eines elastomeren Materials entlang eines langgestreckten Körpers dieses gespannt und die Energie in dem gespannten elastomeren Material gespeichert wird. Durch Entspannen des elastomeren Materials wird die gespeicherte mechanische Energie durch Lösen einer Bremse an den Verbraucher abgegeben.
Nachteilig ist hier, dass die Abgabe der Energie an den Verbraucher nur bedingt kontrollierbar möglich ist.
Die kontrollierte Abgabe nach vorgegebenen Zeitintervallen ist gar nicht möglich.
Ferner ist nachteilig, dass das elastomere Material Zugbeanspruchungen und damit einhergehenden Hystereseverlusten unterliegt, so dass die Energie mit hohem Verlust abgegeben wird.

Bekannt ist ferner aus der Patentschrift DE 69400598 eine Seilstartvorrichtung mit Energiespeicherung. Nachteilig ist hier, dass die gespeicherte Energie nicht kontrolliert abgegeben werden kann und soll, sondern nur insgesamt und auf einmal freigesetzt werden kann.

Bekannt ist weiter aus der Patentschrift DE 2353714 A1 eine Vorrichtung zur Erzeugung von Strom über einen endlichen Zeitraum zur Verwendung bei der Heim-Selbstversorgung oder einem Fahrzeugantrieb. Nachteilig ist hier, dass die als Energiespeicher verwendeten Triebfedern nur über einen separaten Elektromotor nachspannbar sind und es einer mechanisch-hydraulischen Energieübertragungseinrichtung bedarf, wobei zahlreiche Getriebesätze notwendig sind, welche zu erheblichen Energieverlusten führen. Eine Energieaufnahme bei zeitgleicher Energieabgabe ist nicht möglich.

Die Druckschrift EP0623743 A1 offenbart die Merkmale des Oberbegriffs des Anspruchs 1 EP0623743 A1 betrifft eine Seilstartvorrichtung mit Energiespeicherung, bei der die Energie in einem Aufwickelstarter über eine Spiralblattfeder gespeichert wird. Die Spiralblattfeder ist zwischen der zweiten Trommel (36) und den Außenteilen (30) eingebaut, wobei die Spiralblattfeder vom Außenteil durch Drehung der zweiten Trommel entgegengesetzt zur Startrichtung derart aufgewickelt wird, dass eine Aufwickelkraft der Feder in der zweiten Trommel als eine Drehkraft in Startrichtung gespeichert wird. Nachteilig ist hier, dass aufgrund der Verwendung einer Feder die Speicherkapazität begrenzt ist. Eine Addition der Umdrehungen bzw. des Weges der Feder wird nicht erreicht.

Weiterhin bekannt ist aus der Gebrauchsmusterschrift DE 20 2012 006 323 U1 ein Federspeicher zur temporären Speicherung von elektrischem Strom, der mittels Elektromotor in Federspannung umgesetzt wird und umgekehrt aus der Entlastung der Federspannung elektrischen Strom abrufbar hält. Der Federspeicher besteht aus einem Metallzylinder, der eine Feder enthält, die über einen Elektromotor gespannt werden kann. Die Energie zum Spannen der Feder liefert eine angeschlossene Stromquelle. Erzeugt die Stromquelle Strom, treibt dieser den Elektromotor an, der wiederum die Feder spannt. Erzeugt die Stromquelle keinen oder ungenügend Strom, wird der Elektromotor umgeschaltet und die Feder treibt ihrerseits den Elektromotor an und gibt so die in der Feder gespeicherte Energie in Form von elektrischen Strom wieder ab. Nachteilig ist hier, dass aufgrund der Verwendung ausschließlich einer einzigen Feder die Speicherkapazität begrenzt ist. Eine zeitgleiche Energieaufnahme- und abgabe ist aufgrund der Umkehrung des Elektromotors nicht möglich.

Der Erfindung liegt die Aufgabe zu Grunde, eine Vorrichtung vorzuschlagen, mit welcher überschüssige elektrische Energie in Form von mechanischer Energie gespeichert werden kann, wobei Energieaufnahme und kontrollierte Energieabgabe zeitgleich erfolgen kann.

Die Aufgabe der Erfindung wird erfindungsgemäß gelöst durch die im kennzeichnenden Teil des Anspruchs 1 angegebenen Merkmale. Weitere Ausgestaltungen der Erfindung ergeben sich aus den Unteransprüchen sowie des nachfolgenden Ausführungsbeispiels. Die erfindungsgemäße Vorrichtung zur mechanischen Speicherung elektrischer Energie / Axialbewegungsspeichersammler, die vorzugsweise aus erneuerbaren Energiequellen erzeugt wird, weist ein in einem Gehäuse angeordneten Federspeicher, der mittels Elektromotor gespannt wird, auf. Der Federspeicher besteht aus einer bestimmten Anzahl in Reihe angeordneten Federpaketen, wobei die Federn innerhalb der Federpakete entgegengesetzt gewickelt angeordnet, über ihre äußeren Enden miteinander verbunden und mit einer drehbar gelagerten Umhausung versehen sind.

Die Federpakete sind untereinander über geschlitzte Hohlwellen verbunden, wobei die Wicklung der ersten Feder des nachfolgenden Federpaketes entgegengesetzt zur Wicklung der zweiten Feder des vorangehenden Federpaketes ausgeführt wird.

Die Federn sind als Spiralfedern ausgebildet.

Die erfindungsgemäße Vorrichtung kann auch aus mehreren parallel zueinander angeordneten Federspeichern bestehen.

Die Anordnung der Federspeicher innerhalb des Gehäuses kann sowohl vertikal, als auch horizontal erfolgen.

Grundgedanke der Erfindung ist die Speicherung mechanischer Energie und bei Bedarf die Umwandlung der gespeicherten Energie in elektrische Energie, mit der Möglichkeit einer drehzahlunabhängigen Nachladung des Energiespeichers sowie eine zeit- und drehzahlgeregelte Umwandlung.

Das Einsatzgebiet der Vorrichtung ist nicht nur die Kombination mit Elektroerzeugungsanlagen, beispielsweise Windrädern, Photovoltaikanlagen usw., für eine netzunabhängige Hausstromversorgung, sondern auch für mobile Anlagen (sogenannte Notstromaggregate) die zeitlich begrenzt benutzt werden, beispielsweise auf Baustellen oder im Forst.

Mittels der erfindungsgemäßen Vorrichtung ist es möglich, mechanische Energie zu speichern und zeitgleich kontrolliert Energie abzugeben.

Anhand eines Ausführungsbeispiels soll die Erfindung näher beschrieben werden.

Es zeigen
- **Figur 1**: Vorrichtung zur Energiespeicherung
- **Figur 2**: Vorrichtung einer weiteren Ausführung in horizontaler Bauweise

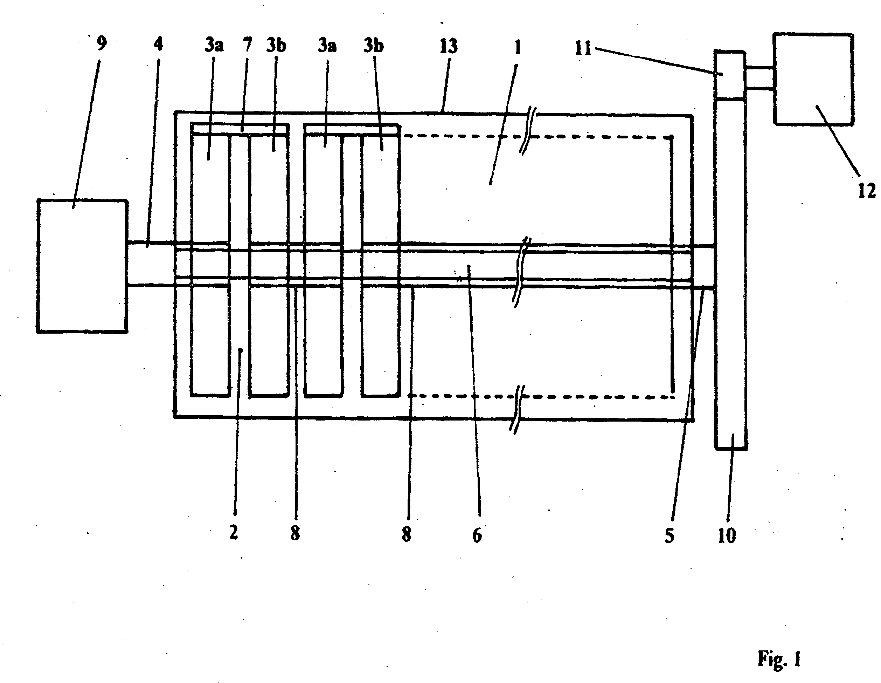

Die **Figur 1** zeigt eine Prinzipdarstellung der Vorrichtung zur Energiespeicherung. Die Vorrichtung weist einen Federspeicher **1** auf, der aus einer bestimmten Anzahl von in Reihe geschalteten Federpaketen **2** mit den Federn **3 a, b** besteht, wobei jedes Federpaket mit einer Umhausung versehen ist. Die Federn **3 a, b** sind als Spiralblattfedern ausgebildet. Auf einer Führungswelle **6,** welche an den sich gegenüberliegenden Seiten des Gehäuses des Federspeichers **1** der Vorrichtung jeweils mittig gelagert ist, ist zum Zwecke der Energiezufuhr eine die Führungswelle **6** drehbar gleitend umschließende und einseitig geschlitzte Eingangswelle **4** angeordnet. Mit der Eingangswelle **4** ist eine Spiralblattfeder **3** über einen in den einseitigen Schlitz der Eingangswelle **4** eingeführten abgewinkelten Teil der Spiralblattfeder **3** fest verbunden. Jeweils zwei der Spiralblattfedern **3a, b** bilden ein Federpaket **2,** wobei die erste der Spiralblattfedern **3a** in Lage eine Linkswicklung und die zweite der Spiralblattfedern **3b** in Lage eine Rechtswicklung aufweist. Die beiden Spiralblattfedern **3a, b** sind auf ihrer Außenseite fest miteinander verbunden (Verbindung **7**). Je nach der gewünschten Speicherkapazität ist eine bestimmte Anzahl der Federpakete **2** vorgesehen, wobei unmittelbar benachbarte Spiralblattfedern **3a, b** der Federpakete **2** jeweils entgegengesetzt gewickelt sind.

Die Federpakete **2** sind untereinander über eine geschlitzte Hohlwelle **8** verbunden und zwar jeweils die zweite Feder **3b** des vorangehenden Federpakets **2** mit der ersten Feder **3a** des folgenden Federpaketes **2.** Die Hohlwelle **8** ist dabei keine durchgehende Welle, sondern sie ist in Abschnitte zwischen den Federpaketen **2** aufgeteilt.

An der Eingangswelle **4** der Vorrichtung ist ein Elektromotor **9** vorgesehen. Dieser ist über eine nicht näher dargestellte Rutschkupplung mit der Eingangswelle **4** verbunden, wodurch ein Überladen verhindert werden kann. An der Ausgangswelle **5** ist ein Schwungrad, dessen äußerer Umfang mit einer Verzahnung versehen ist, angeordnet. In diese Verzahnung greift ein auf der Antriebswelle eines Generators **12** angeordnetes Ritzel **11** an.

Dadurch ist es möglich, die Generatordrehzahl auf ein wirtschaftliches Maß zu heben, wobei das Drehzahlverhältnis vorzugsweise in einen Bereich von 1:15 bis 1:20 liegt.

Entsprechend dem Bedarf der Speicherkapazität werden mehrere Federpakete 2 in Reihe angeordnet, wobei zwischen der zweiten Feder **3b** des vorangehenden Federpaketes **2** und der ersten Feder **3a** des folgenden Federpaketes **2** auf der Führungswelle **6** eine drehbar gleitend umschließende beidseitig um 180° versetzt geschlitzte Hohlwelle **8** angebracht ist. Mit dieser Hohlwelle **8** sind jeweils zwei - stets, in Einbaulage gegenläufig gewickelte - Spiralblattfedern **3a, b** über den jeweiligen in den Schlitz der beidseitig um 180° versetzt geschlitzten Hohlwelle **8** eingeführten abgewinkelten Enden der Federn **3a** fest verbunden.

Auf der Führungswelle **6,** wird zum Zwecke der Energieabgabe der gespeicherten mechanischen Energie eine die Führungswelle **6** ebenfalls drehbar gleitend umschließende Ausgangswelle **5** verwendet. Mit der Ausgangswelle **5** ist die zweite Spiralblattfeder **3b** des letzten Federpaketes **2** über das in den einseitigen Schlitz der eingeführte abgewinkelte Ende der Spiralblattfeder **3b** fest verbunden.

Das Aufladen der Vorrichtung erfolgt durch den Elektromotor **9** und zwar dadurch, dass dieser seine Drehbewegung über die Eingangswelle **4** auf die erste Feder **3a** des ersten Federpaketes **2** überträgt. Dadurch wird die erste Feder **3a** gespannt. Ab einem bestimmten Spannungszustand wird die Drehbewegung auf die zweite Feder **3b** des ersten Federpaketes **2** übertragen. Dies erfolgt über die Verbindung **7,** mit dem die beiden Federn **3a, b** auf ihrer Außenseite verbunden sind. Die Verbindung zwischen zwei benachbarten Federpaketen **2** erfolgt über die Hohlwellen **8,** so dass nacheinander alle Federn **3a, b** der Federpakete **2** gespannt werden. Die Entladung des Federspeichers **1** und damit die Umwandlung der gespeicherten mechanischen Energie in elektrische Energie, erfolgt durch Freigabe des Schwungrades **10.** Dazu ist dieses mit einer Regeleinrichtung, beispielsweise einen Kurbeltrieb mit Pendel, versehen. Die Regeleinrichtung dient zum einen dem Starten bzw. Anhalten des Federspeichers und zum anderen dazu, die Drehzahl des Schwungrades **10** zu vergleichmäßigen. Das Entladen des Federspeichers **1** erfolgt wie beim Aufladen, nur in umgekehrter Reihenfolge.

Durch die erfindungsgemäße Ausbildung der Vorrichtung ist es möglich, den Federspeicher **1** auch während des Entladevorganges, also wenn Strom durch die Vorrichtung erzeugt wird, über den Elektromotor **9** nachzuladen.

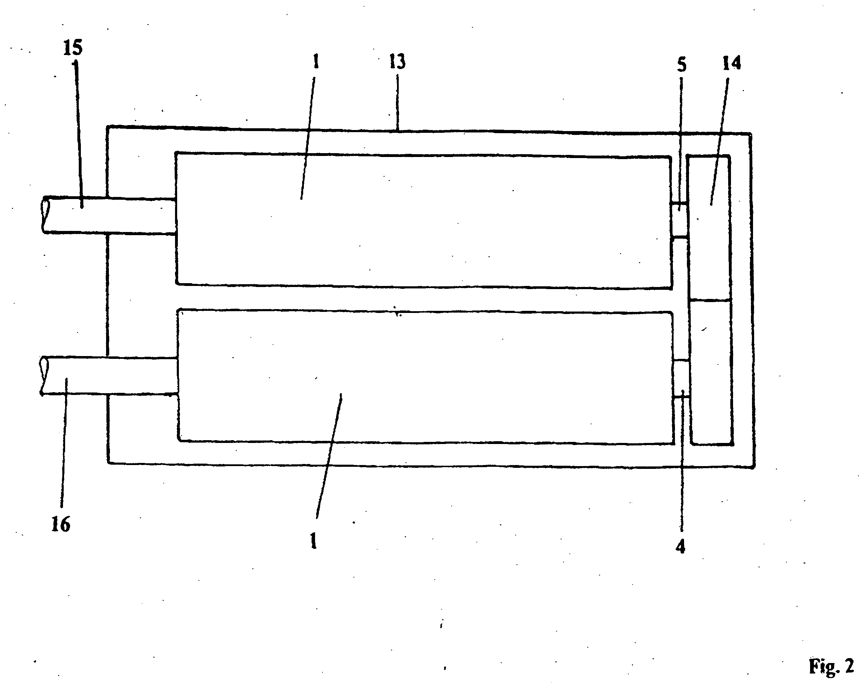

Die Figur 2 zeigt eine weitere Ausführung der erfindungsgemäßen Vorrichtung zur Energiespeicherung in horizontaler Bauart. In einem Gehäuse **13** sind zwei Federspeicher **1** parallel zueinander angeordnet...
Die Antriebswelle **15** des ersten Federspeichers **1** ist mit einen nicht näher dargestellten Elektromotor **9** verbunden. Die Ausgangswelle **5** des ersten Federspeichers **1** ist über ein Getriebe **14** mit der Eingangswelle **4** des zweiten Federspeichers **1** verbunden, dessen Ausgang mit der Abtriebswelle **16.**
Die Abtriebswelle **16,** ist über ein mit einer Außenverzahnung versehenen Schwungrad **10** verbunden. In die Außenverzahnung greift das auf der Generatorwelle angeordnete Ritzel **11** ein.

Neben der horizontalen Bauart der erfindungsgemäßen Vorrichtung, ist auch eine senkrechte Bauart möglich. Hier macht es sich aber notwendig, die Federspeicher **1** in kleine Einheiten mit einer geringen Anzahl von Federpaketen **2** zu unterteilen und diese jeweils für sich zu lagern.

### Bezugszeichen Liste

- 1: Federspeicher
- 2: Federpaket
- 3 a: erste Feder
- 3 b: zweite Feder
- 4: Eingangswelle
- 5: Ausgangswelle
- 6: Führungswelle
- 7: Verbindung
- 8: Hohlwelle
- 9: Elektromotor
- 10: Schwungrad
- 11: Ritzel
- 12: Generator
- 13: Gehäuse
- 14: Getriebe
- 15: Antriebswelle
- 16: Abtriebswelle

## Patentansprüche

1. Vorrichtung zur mechanischen Speicherung von elektrischer Energie / Axialbewegungsspeichersammler,
die vorzugsweise aus erneuerbaren Energiequellen erzeugt wird, mit einem in einem Gehäuse angeordneten Federspeicher, der mittels eines Elektromotors gespannt wird,
**dadurch gekennzeichnet, dass** der Federspeicher (1) aus einer bestimmten Anzahl in Reihe angeordneten Federpaketen (2) besteht, wobei die Federn (3 a, b) innerhalb der Federpakete (2) entgegengesetzt gewickelt angeordnet, über ihre äußeren Enden über die Verbindung (7) miteinander verbunden und mit einer Umhausung versehen sind.

2. Vorrichtung nach Anspruch 1,
**dadurch gekennzeichnet, dass**
die Federpakete (2) untereinander über geschlitzte Hohlwellen (8) verbunden sind, wobei die Wicklung der ersten Feder (3 a) des nachfolgenden Federpaketes (2) entgegengesetzt zur Wicklung der zweiten Feder (3 b) des vorangehenden Federpaketes (2) ausgeführt ist.

3. Vorrichtung nach Anspruch 1 und 2,
**dadurch gekennzeichnet, dass**
die Federn (3 a, b) als Spiralblattfedern ausgebildet sind.

4. Vorrichtung nach Anspruch 1 bis 3,
**dadurch gekennzeichnet, dass**
das mehrere parallel zueinander angeordnete Federspeicher (1) angeordnet sind.

5. Vorrichtung nach Anspruch 1 bis 4,
**dadurch gekennzeichnet, dass**
die Anordnung der Federspeicher (1) innerhalb des Gehäuses (13) vertikal erfolgt.

6. Vorrichtung nach Anspruch 1 bis 4,
**dadurch gekennzeichnet, dass**
die Anordnung der Federspeicher (1) innerhalb des Gehäuses (13) horizontal erfolgt.

## Claims

1. Apparatus for the mechanical storage of electrical energy / axial movement storage/collectore which is preferably produced from renewable energy sources, with one in a housing arranged spring accumulator, which is tensioned by means of an electric motor,
**characterized in that** , the spring accumulator (1) consists of a certain number of spring assemblies (2) arranged in series, the springs (3a, b) being wound in opposite directions within the spring assemblies (2), via their outer ends via the connection (7)) are interconnected and provided with a housing.

2. Apparatus according to claim 1,
**characterized in that**
the spring assemblies (2) are interconnected via slotted hollow shafts (8), wherein the winding the first spring (3 a) of the subsequent spring assembly (2) opposite to the winding of the second Spring (3 b) of the preceding spring assembly (2) is executed.

3. Apparatus according to claim 1 and 2,
**characterized in that**
the springs (3 a, b) are formed as spiral leaf springs.

4. Apparatus according to claim 1 to 3,
**characterized in that**
the plurality of mutually parallel spring accumulator (1) are arranged.

5. Apparatus according to claim 1 to 4,
**characterized in that**
the arrangement of the spring store (1) within the housing (13) takes place vertically.

6. Apparatus according to claim 1 to 4,
**characterized in that**
the arrangement of the spring accumulator (1) within the housing (13) is horizontal.

## Revendications

1. Un dispositif de stockage mécanique de l'énergie électrique / collecteur de stockage à mouvement axial, qui est de préférence généré à partir de sources d'énergie renouvelables, avec un ressort disposé dans un boîtier qui est tendu au moyen d'un moteur électrique,
**caractérisé en ce que** l'accumulateur à ressort (1) est constitué d'un certain nombre d'ensembles ressorts (2) disposés en série, les ressorts (3a, b) étant enroulés dans des sens opposés à l'intérieur des ensembles à ressort (2),) sont interconnectés via leurs extrémités extérieures et via le raccord (7) ;
et pourvus d'un boîtier.

2. Appareil selon la revendication 1,
**caractérisé en ce que** les ensembles à ressort (2) sont reliés entre eux par un arbre creux fendu (8), et par le fait que le premier ressort (3a) et l'ensemble à ressort suivant (2) sont enroulés dans des sens opposés au second ressort (3b) et à l'ensemble de ressort précédent (2).

3. Appareil selon les revendications 1 et 2,
**caractérisé en ce que** les ressorts (3 a, b) sont formés en tant que ressorts à lames en spirale.

4. Appareil selon les revendications 1 à 3,
**caractérisé en ce que** plusieurs accumulateurs à ressort (1) sont disposés en parallèle.

5. Appareil selon les revendications 1 à 4,
**caractérisé en ce que** l'agencement de la réserve de ressort (1) est réalisé de façon verticale dans le logement (13).

6. Appareil selon les revendications 1 à 4,
**caractérisé en ce que** l'agencement de la réserve à ressort (1) est horizontal.
à l'intérieur du logement (13) est horizontal.
